(19) Europäisches Patentamt
European Patent Office
Office européen des brevets

(11) **EP 4 682 572 A1**

(12) **EUROPEAN PATENT APPLICATION**
published in accordance with Art. 153(4) EPC

(43) Date of publication:
**21.01.2026 Bulletin 2026/04**

(21) Application number: **23934076.3**

(22) Date of filing: **20.04.2023**

(51) International Patent Classification (IPC):
**G01S 5/02** (2010.01)

(52) Cooperative Patent Classification (CPC):
**G01S 5/02**

(86) International application number:
**PCT/JP2023/015720**

(87) International publication number:
**WO 2024/218931 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventor: **WATANABE, Futa**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **POSITION CORRECTION DEVICE, POSITION CORRECTION METHOD, AND POSITION CORRECTION PROGRAM**

(57) A correspondence identification unit (221) fits a plurality of processing terminals whose positions are to be identified into a template that indicates assumed relative positions of the plurality of processing terminals using grid points, which are intersections of lines drawn in a grid pattern, based on estimated positions respectively corresponding to the plurality of processing terminals, and identify grid points in the template respectively corresponding to the plurality of processing terminals. A template correction unit (222) generates a corrected template by correcting a distance between grid points in the template so as to reduce a degree of deviation calculated based on a distance between each of the plurality of processing terminals and an identified corresponding grid point. A position correction unit (23) sets each of the plurality of processing terminals as a target processing terminal, and corrects an estimated position of the target processing terminal based on a grid point corresponding to the target processing terminal in the corrected template.

Fig. 1

## Description

### Technical Field

The present disclosure relates to a technique for correcting measured positions of terminals.

### Background Art

Positions of terminals may be estimated using a position estimation algorithm based on information such as wireless radio wave strength, radio wave arrival angle, and radio wave arrival time. Positions of terminals may also be estimated based on results of measurement using a laser rangefinder or a measure. A specific example of terminals are wireless terminals. Wireless terminals are, for example, air conditioning indoor units or lighting fixtures with a wireless communication function.

The positions of terminals estimated by the above methods may contain errors.

Patent Literature 1 describes a technique for correcting positions of terminals estimated using wireless technology. In Patent Literature 1, the positions of terminals are corrected by fitting the positions of terminals into a template formed using intervals of a construction unit or intervals of an integer multiple or integer fraction of the construction unit.

### Citation List

### Patent Literature

Patent Literature 1: JP 2006-90868 A

### Summary of Invention

### Technical Problem

Terminals are installed at different intervals depending on the size of a room or the type of device. That is, terminals are not necessarily installed at intervals based on the construction unit. Therefore, if the positions of terminals are fitted into a template formed using intervals based on the construction unit, as in Patent Literature 1, there is a risk that the positions of terminals may be corrected to incorrect positions.

An object of the present disclosure is to make it possible to appropriately correct positions of terminals.

### Solution to Problem

A position correction device according to the present disclosure includes

a correspondence identification unit to fit a plurality of processing terminals whose positions are to be identified into a template based on estimated positions respectively corresponding to the plurality of processing terminals, the template indicating assumed relative positions of the plurality of processing terminals using grid points, which are intersections of lines drawn in a grid pattern, and identify grid points in the template respectively corresponding to the plurality of processing terminals;

a template correction unit to generate a corrected template by correcting a distance between grid points in the template so as to reduce a degree of deviation calculated based on a distance between each of the plurality of processing terminals and a corresponding grid point identified by the correspondence identification unit; and

a position correction unit to set each of the plurality of processing terminals as a target processing terminal, and correct an estimated position of the target processing terminal based on a grid point corresponding to the target processing terminal in the corrected template generated by the template correction unit.

### Advantageous Effects of Invention

In the present disclosure, a template is corrected to reduce a degree of deviation between estimated positions of processing terminals and positions of grid points in the template, and then the estimated positions are corrected based on the template. This reduces the possibility of the positions of the processing terminals being corrected to incorrect positions, making it possible to appropriately correct the positions of the processing terminals.

## Brief Description of Drawings

Fig. 1 is a configuration diagram of a position correction device 10 according to Embodiment 1.

Fig. 2 is a flowchart of processes of the position correction device 10 according to Embodiment 1.

Fig. 3 is a diagram describing information stored in an estimated position storage unit 31 according to Embodiment 1.

Fig. 4 is a diagram describing templates 40 according to Embodiment 1.

Fig. 5 is a diagram describing parameters of the templates 40 according to Embodiment 1.

Fig. 6 is a flowchart of a template optimization process according to Embodiment 1 according to Embodiment 1.

Fig. 7 is a diagram describing a position correction process according to Embodiment 1.

Fig. 8 is a configuration diagram of the position correction device 10 according to Variation 1.

Fig. 9 is a flowchart of processes of the position correction device 10 according to Variation 1.

Fig. 10 is a configuration diagram of the position correction device 10 according to Embodiment 2.

Fig. 11 is a configuration diagram of the position correction device 10 according to Embodiment 3.

Fig. 12 is a diagram describing an overview of the operation of the position correction device 10 according to Embodiment 3.

Fig. 13 is a diagram describing information stored in a connection relationship storage unit 34 according to Embodiment 3.

Fig. 14 is a diagram describing information stored in the connection relationship storage unit 34 according to Variation 5.

## Description of Embodiments

Embodiment 1.

*** Description of Configuration ***

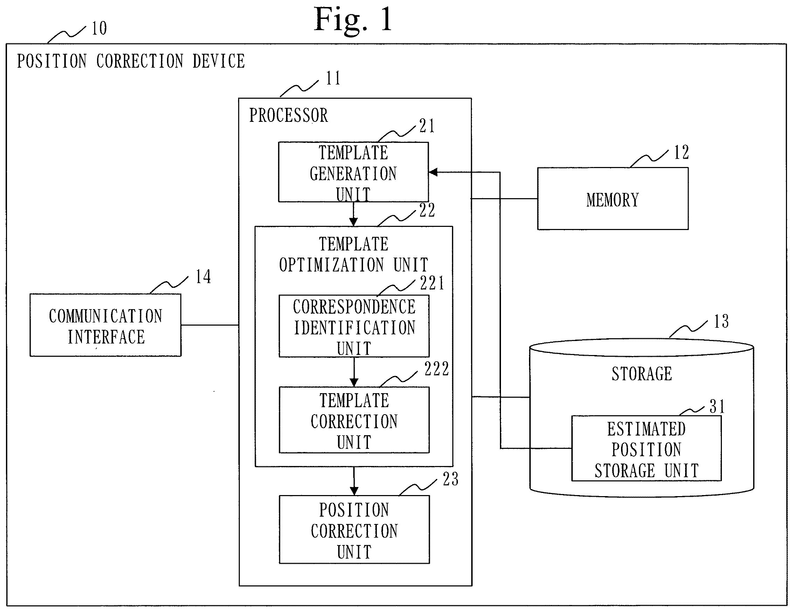

Referring to Fig. 1, a configuration of a position correction device 10 according to Embodiment 1 will be described.
The position correction device 10 is a computer.
The position correction device 10 includes hardware of a processor 11, a memory 12, a storage 13, and a communication interface 14. The processor 11 is connected with other hardware components via signal lines and controls these other hardware components.
The processor 11 is an IC that performs processing. IC is an abbreviation for integrated circuit. Specific examples of the processor 11 are a CPU, a DSP, and a GPU. CPU is an abbreviation for central processing unit. DSP is an abbreviation for digital signal processor. GPU is an abbreviation for graphics processing unit.
The memory 12 is a storage device to temporarily store data. Specific examples of the memory 12 are an SRAM and a DRAM. SRAM is an abbreviation for static random access memory. DRAM is an abbreviation for dynamic random access memory.
The storage 13 is a storage device to store data. A specific example of the storage 13 is an HDD. HDD is an abbreviation for hard disk drive. The storage 13 may be a portable recording medium, such as an SD (registered trademark) memory card, CompactFlash (registered trademark), a NAND flash, a flexible disk, an optical disc, a compact disc, a Blu-ray (registered trademark) disc, or a DVD. SD is an abbreviation for Secure Digital. DVD is an abbreviation for digital versatile disk.
The communication interface 14 is an interface for communicating with external devices. Specific examples of the communication interface 14 are an Ethernet (registered trademark) port, a USB port, and an HDMI (registered trademark) port. USB is an abbreviation for Universal Serial Bus. HDMI is an abbreviation for High-Definition Multimedia Interface.

The position correction device 10 includes, as functional components, a template generation unit 21, a template optimization unit 22, and a position correction unit 23. The template optimization unit 22 includes a correspondence identification unit 221 and a template correction unit 222. The functions of the functional components of the position correction device 10 are realized by software.

The storage 13 stores programs that realize the functions of the functional components of the position correction device 10. These programs are loaded into the memory 12 by the processor 11 and are executed by the processor 11. This realizes the functions of the functional components of the position correction device 10.

The storage 13 realizes the function of an estimated position storage unit 31. In place of the storage 13, an external storage device of the position correction device 10 may realize the function of the estimated position storage unit 31.

In Fig. 1, only one processor 11 is illustrated. However, there may be a plurality of processors 11, and the plurality of processors 11 may execute the programs to realize the functions in corporation.

\*\*\* Description of Operation \*\*\*

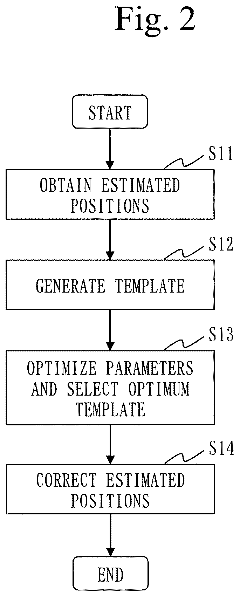

Referring to Figs. 2 to 6, the operation of the position correction device 10 according to Embodiment 1 will be described.

A procedure for the operation of the position correction device 10 according to Embodiment 1 is equivalent to a position correction method according to Embodiment 1. A program that realizes the operation of the position correction device 10 according to Embodiment 1 is equivalent to a position correction program according to Embodiment 1.

Referring to Fig. 2, processes of the position correction device 10 according to Embodiment 1 will be described.

(Step S11 in Fig. 2: Estimated position acquisition process)

The template generation unit 21 obtains estimated positions respectively corresponding to a plurality of processing terminals from the estimated position storage unit 31. The processing terminals are terminals whose positions are to be identified. It is assumed here that the estimated positions of the plurality of processing terminals each contain errors. It is also assumed that the plurality of processing terminals are arranged in a regular pattern. Arranged in a regular pattern means that they are arranged in a parallel pattern or a staggered pattern, which are to be described later.

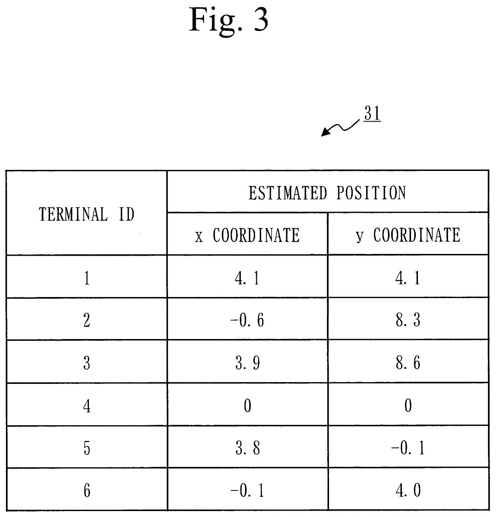

Referring to Fig. 3, information stored in the estimated position storage unit 31 according to Embodiment 1 will be described.

The estimated position storage unit 31 stores an estimated position for each terminal ID. ID is an abbreviation for identifier.

A terminal ID is identification information of a processing terminal.

An estimated position is a position of a processing terminal estimated by a position estimation algorithm or the like. The estimated position is a position relative to a reference point. The estimated position includes an x coordinate and a y coordinate. The estimated position may contain errors. The reference point is set in advance. For example, the reference point is a position of any processing terminal, a position of a corner of a facility where the processing terminal is installed, or the like.

(Step S12 in Fig. 2: Template generation process)

The template generation unit 21 generates a template 40 using the number of processing terminals and the estimated positions of the plurality of processing terminals obtained in step S11.

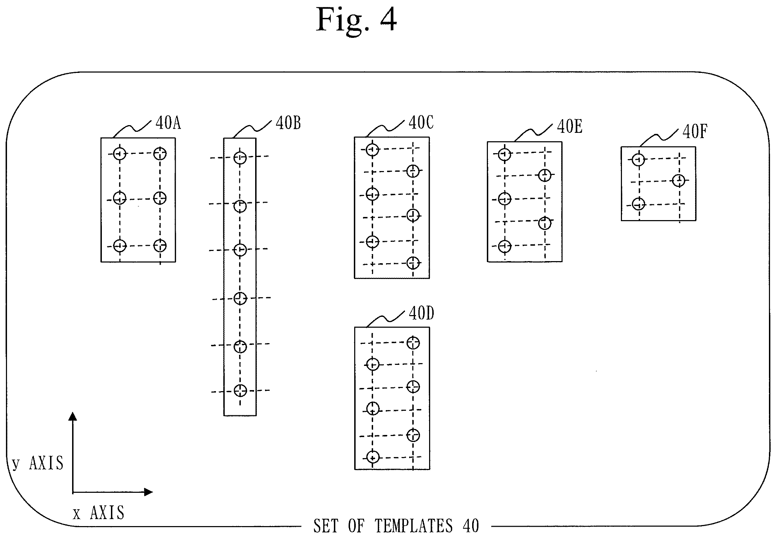

Referring to Fig. 4, the template 40 according to Embodiment 1 will be described.

The template 40 indicates assumed relative positions of a plurality of terminals using grid points 41, which are intersections of lines drawn in a grid pattern. That is, the template 40 indicates the assumed relative positions of the plurality of terminals using the grid points 41, which are intersections of parallel horizontal lines drawn at equal intervals and parallel vertical lines drawn at equal intervals.

In Embodiment 1, the terminals are assumed to be arranged in two arrangement patterns, parallel arrangement and staggered arrangement. The parallel pattern is a pattern in which grid points are sequentially arranged in an x-axis direction and a y-axis direction. The staggered pattern is a pattern in which grid points are arranged in an alternating shifted manner in the x-axis direction or the y-axis direction.

Templates 40A and 40B in Fig. 4 show examples of the parallel pattern when the number of processing terminals N is six. In the template 40A, all six intersections of three horizontal lines and two vertical lines are set as the grid points 41 where the terminals are assumed to be placed. In the template 40B, all intersections of six horizontal lines and one vertical line are set as the grid points 41.

Templates 40C and 40D in Fig. 4 show examples of the staggered pattern when the number of processing terminals N is six. In the templates 40C and 40D, grid points are positioned alternately in the y-axis direction. Note that the staggered pattern can never be a case where there is a single horizontal or vertical line due to its shape.

Additionally, various templates 40 with different number of processing terminals are conceivable, as shown in templates 40E and 40F.

The template generation unit 21 generates the template 40 based on the number of processing terminals and the range of the estimated positions of the plurality of processing terminals obtained in step S11.

The template generation unit 21 generates the template 40 by generating a combination of parameters that represent the template 40. The parameters include the number of columns nx, the number of rows ny, distances $\Delta x$ and $\Delta y$ between grid points, and shape parameters $\alpha x$, $\alpha y$, $\beta$. The number of columns nx is the number of lines aligned in the x-axis direction and forming the grid points. The number of rows ny is the number of lines aligned in the y-axis direction and forming the grid points. The distance $\Delta x$ between grid points is a distance between grid points in the x-axis direction. The distance $\Delta y$ between grid points is a distance between grid points 41 in the y-axis direction. The shape parameter $\alpha x$ indicates whether staggered arrangement is formed in the x-axis direction. The shape parameter $\alpha y$ indicates whether staggered arrangement is formed in the y-axis direction. Each of the shape parameters $\alpha x$ and $\alpha y$ is set to a value of 0 or 1. When the shape parameters $\alpha x$ and $\alpha y$ are 0, this represents parallel arrangement, and when one of them is 1, this represents staggered arrangement. The shape parameter $\beta$ indicates a start position in a case of the staggered pattern. Since the grid points 41 are arranged alternately in the staggered pattern, the start position is shifted between two neighboring grid points 41 between when the shape parameter $\beta$ is 0 and when the shape parameter $\beta$ is 1, as in the templates 40C and 40D.

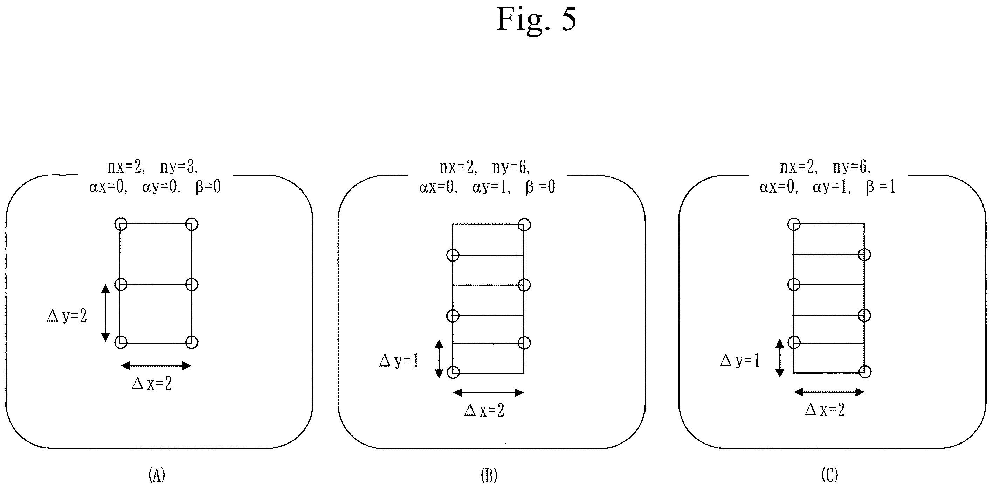

(A) of Fig. 5 shows the template 40 when the parameter are set as follows: number of columns nx = 2, number of rows ny = 3, distance $\Delta x$ between grid points = 2, distance $\Delta y$ between grid points = 2, shape parameter $\alpha x$ = 0, shape parameter $\alpha y$ = 0, and shape parameter $\beta$ = 0.

(B) of Fig. 5 shows the template 40 when the parameters are set as follows: number of columns nx = 2, number of rows ny = 6, distance $\Delta x$ between grid points = 2, distance $\Delta y$ between grid points = 1, shape parameter $\alpha x$ = 0, shape parameter $\alpha y$ = 1, and shape parameter $\beta$ = 0.

(C) of Fig. 5 shows the template 40 when the parameter are set as follows: number of columns nx = 2, number of rows ny = 6, distance $\Delta x$ between grid points = 2, distance $\Delta y$ between grid points = 1, shape parameter $\alpha x$ = 0, shape parameter $\alpha y$ = 1, and shape parameter $\beta$ = 1.

Specifically, the template generation unit 21 generates the templates 40 of (A) and (B) below.

In the following description, a distance $\Delta(a, b) = a / (b - 1)$. A range w is a range in the x-axis direction in the range of the estimated positions. A range h is a range in the y-axis direction in the range of the estimated positions. That is, the range $w = \max(X) - \min(X)$ and the range $h = \max(Y) - \min(Y)$. X is a set of x coordinates of the estimated positions of the processing terminals. Y is a set of y coordinates of the estimated positions of the processing terminals.

It is assumed here that the grid points 41 are placed without any missing grid points. Missing grid points 41 means that some of the grid points 41 arranged regularly are missing.

(A) The template generation unit 21 identifies one or more combinations of the number of columns nx and the number of rows ny where a product of the number of columns nx and the number of rows ny equals the number of processing terminals N. That is, nx • ny = N.

The template generation unit 21 sets each of the one or more combinations as a target combination. The template generation unit 21 sets a distance $\Delta(w, nx)$ as the distance $\Delta x$ between grid points in the x-axis direction for the target combination. That is, the template generation unit 21 sets a distance calculated by dividing the range w in the x-axis direction of the range of the estimated positions by a value obtained by subtracting one from the number of columns nx as the distance $\Delta x$ between grid points in the x-axis direction. The template generation unit 21 also sets a distance $\Delta(h, ny)$ as the distance $\Delta y$ between grid points in the y-axis direction for the target combination. That is, the template generation unit 21 sets a distance calculated by dividing the range h in the y-axis direction of the range of the estimated positions by a value obtained by subtracting one from the number of rows ny as the distance $\Delta y$ between grid points in the y-axis direction.

Then, the template generation unit 21 sets the shape parameters $\alpha x$, $\alpha y$, and $\beta$ for the target combination to 0, and generates the template 40.

(B) The template generation unit 21 identifies one or more combinations of the number of columns nx and the number of rows ny where a product of the number of columns nx and the number of rows ny equals twice the number of terminals N, twice the number of terminals N plus one, or twice the number of terminals N minus one. That is, nx • ny = 2N or nx • ny = 2N ± 1.

The template generation unit 21 sets each of the one or more combinations as the target combination. The template generation unit 21 sets a distance Δ(w, nx) as the distance Δx between grid points in the x-axis-direction for the target combination. That is, the template generation unit 21 sets a distance calculated by dividing the range w in the x-axis direction by a value obtained by subtracting one from the number of columns nx as the distance Δx between grid points in the x-axis direction. The template generation unit 21 sets a distance Δ(h, ny) as the distance Δy between grid points in the y-axis direction for the target combination. That is, the template generation unit 21 sets a distance calculated by dividing the range h in the y-axis direction by a value obtained by subtracting one from the number of rows ny as the distance Δy between grid points in the y-axis direction.

Then, the template generation unit 21 generates the templates 40 for all combinations of the shape parameters αx, αy, and β for the target combination.

For example, it is assumed that the number of terminals N is 4. In this case, the parameters (nx, ny, Δx, Δy, αx, αy, β) for the following seven templates 40, (1) to (7), are generated.

(1) {1, 4, 0, Δ(h, 4), 0, 0, 0}
(2) {4, 1, Δ(w, 4), 0, 0, 0, 0}
(3) {2, 2, Δ(w, 2), Δ(h, 2), 0, 0, 0}
(4) {2, 4, Δ(w, 2), Δ(h, 4),1, 0, 0}
(5) {2, 4, Δ(w, 2), Δ(h, 4), 1, 0, 1}
(6) {4, 2, Δ(w, 4), Δ(h, 2), 1, 0, 0}
(7) {4, 2, Δ(w, 4), Δ(h, 2), 1, 0, 1}

It is assumed here that the grid points 41 are arranged without any missing grid points. If there are any missing grid points 41 in the parallel arrangement, the templates 40 needs to be generated taking into consideration an upper limit $n_c$ for the number of missing points. Specifically, for (A), the template generation unit 21 identifies one or more combinations where nx • ny = N + $n_c$. Then, the template generation unit 21 generates the template 40 for each arrangement of the grid points 41 with any missing grid point.

(Step S13 in Fig. 2: Template optimization process)

The template optimization unit 22 selects the template 40 with the smallest degree of deviation from the one or more of templates 40 generated in step S12. At the same time, the template optimization unit 22 optimizes the distances Δx and Δy between grid points and a fitting position θ of the template 40 so as to reduce the degree of deviation.

The degree of deviation is an evaluation value calculated based on the distances between each processing terminal of the plurality of processing terminals and its corresponding grid point 41. For example, the degree of deviation is the sum of the distances between each processing terminal of the plurality of processing terminals and its corresponding grid point 41. The fitting position θ indicates a position based on which the template 40 is matched to the coordinate system of the plurality of processing terminals. That is, the fitting position θ indicates where a reference position in the coordinate system of the plurality of processing terminals is located in the template 40.

Specifically, the template optimization unit 22 optimizes the distances Δx and Δy between grid points and the fitting position θ by solving the optimization problem indicated in Formula 1, and selects the template 40 with the smallest degree of deviation among each optimized template 40. In the following description, it is assumed that a position p^i of a processing terminal i is coordinate-transformed as p^i = p^i - [min(X), min(Y)]$^T$.

[Formula 1]

$$u^* = \arg\min_{u} J(Z_u^*, \theta_u^*) \text{ subject to } 1 \le u \le |Z|,$$

where

$$Z_u^* = \{nx_u, ny_u, \Delta x_u^*, \Delta y_u^*, \alpha x_u, \alpha y_u, \beta_u\},$$

$$\{\Delta x_u^*, \Delta y_u^*, \theta_u^*\} = \arg\min_{\Delta x_u, \Delta y_u, \theta_u} J(Z_u, \theta_u)$$

$$J(Z_u, \theta_u) = \sum_{1 \le i \le N} \left\| \hat{p}_i - \xi(\hat{p}_i, Z_u^{(0)}, Z_u) + \theta_u \right\|^2.$$

In Formula 1, Z is a set of the templates 40 generated in step S12. A subscript u is an identifier of the template 40. Therefore, $Z_u$ represents an individual template 40 included in the set Z. Also, $xn_u$, $ny_u$, $\Delta x^*_u$, $\Delta y^*_u$, $\alpha x_u$, $\alpha y_u$, and $\beta_u$ represent parameters for the individual template 40. A subscript "*" indicates an optimized parameter. That is, $\Delta x^*_u$ and $\Delta y^*_u$ represent the optimized distances $\Delta x$ and $\Delta y$ between grid points. $\theta^*_u$ represents the optimized fitting position $\theta$, and $u^*$ represents the template 40 with the smallest degree of deviation in the optimized state. $Z^*_u$ represents the optimized template $Z_u$. $J(Z_u, \theta_u)$ is an evaluation function that calculates a degree of deviation between the template 40 and a provisional position.

In Formula 1, a function $\zeta(p^{\wedge}_i, Z^{(0)}_u, Z_u)$ is a function that uses the template $Z_u$ to recalculate the coordinates of a grid point closest to the position $p^{\wedge}i$ of the processing terminal i on a template $Z^{(0)}_u$. The template $Z^{(0)}_u$ represents an initial value of the template $Z_u$. The processing terminal i is the i-th processing terminal of the N processing terminals.

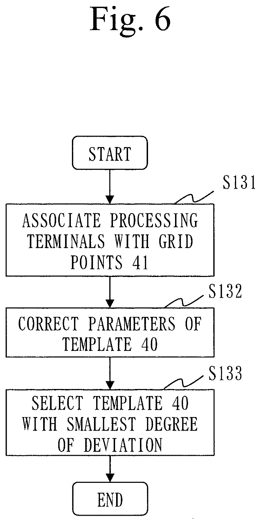

Referring to Fig. 6, the template optimization process according to Embodiment 1 will be described.

By solving the optimization problem indicated in Formula 1, the following processes are collectively performed.

(Step S131 in Fig. 6: Correspondence identification process)

The correspondence identification unit 221 sets each of the one or more of templates 40 generated in step S12 as a target template 40. The correspondence identification unit 221 fits the plurality of processing terminals into the target template 40 based on the estimated positions of the plurality of processing terminals. As a result, the correspondence identification unit 221 identifies the grid points 41 in the target template 40 respectively corresponding to the plurality of processing terminals.

The correspondence identification unit 221 here sets each of the plurality of processing terminals as a target processing terminal, and identifies the grid point 41 closest to the target processing terminal as the grid point 41 corresponding to the target processing terminal, using the function $\zeta(p^{\wedge}_i, Z^{(0)}_u, Z_u)$.

In this case, the initial position of the fitting position $\theta$ is the reference position in the coordinate system of the template 40. The correspondence identification unit 221 identifies the grid point 41 in the template 40 corresponding to each of the plurality of processing terminals, assuming that the fitting position $\theta$ is at the reference position in the coordinate system of the template 40.

(Step S132 in Fig. 6: Template correction process)

The template correction unit 222 sets each of the one or more of templates 40 generated in step S12 as the target template 40. The template correction unit 222 generates a corrected template 42 by correcting the distances $\Delta x$ and $\Delta y$ between grid points and the fitting position $\theta$ in the target template 40 to minimize the degree of deviation calculated using the evaluation function J.

(Step S133 in Fig. 6: Template selection process)

The template correction unit 222 selects the corrected template 42 with the smallest degree of deviation from among each corrected template 42 generated from the one or more templates 40 generated in step S12.

(Step S14 in Fig. 2: Position correction process)

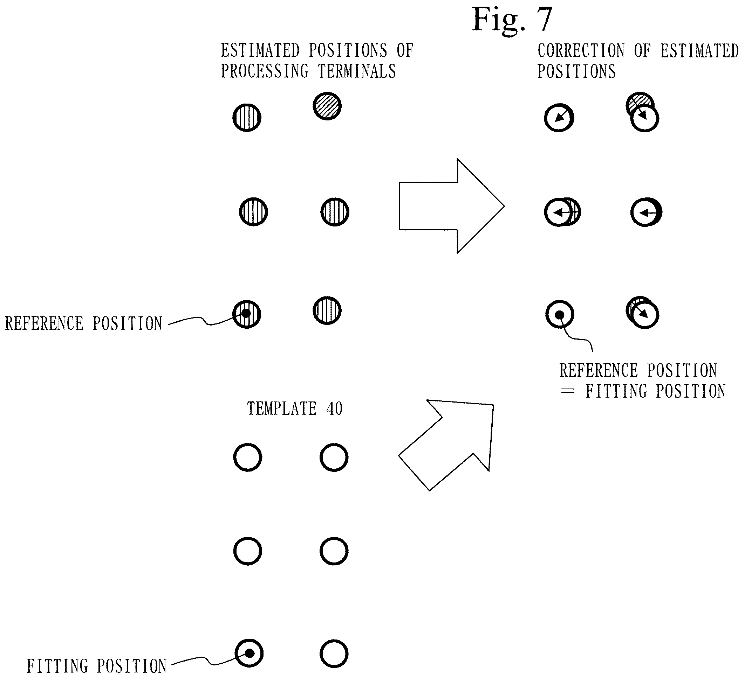

The position correction unit 23 sets each of the plurality of processing terminals as the target processing terminal. Then, the position correction unit 23 corrects the estimated position of the target processing terminal based on the grid point 41 corresponding to the target processing terminal in the corrected template 42 selected in step S133. Specifically, as shown in Fig. 7, the position correction unit 23 corrects the estimated position of the target processing terminal to the position of the grid point 41 corresponding to the target processing terminal in the corrected template 42.

At this time, the position correction unit 23 corrects the estimated position of the target processing terminal to the position of the grid point 41 corresponding to the target processing terminal in a case where the reference position in the coordinate system of the plurality of processing terminals is at the fitting position in the corrected template 42.

That is, the position correction unit 23 corrects the estimated position based on the corrected template 42 selected in step S133, as indicated in Formula 2.

[Formula 2]

$$\hat{p}_i \leftarrow \xi(\hat{p}_i, Z_u^{(0)}, Z_{u^*}^*),$$
$$\text{where } Z_{u^*}^* := \{nx_{u^*}, ny_{u^*}, \Delta x_{u^*}^*, \Delta y_{u^*}^*, \alpha x_{u^*}, \alpha y_{u^*}, \beta_{u^*}\}.$$

In Formula 2, $Z_{u^*}^*$ represents the corrected template 42 selected in step S133.

*** Effects of Embodiment 1 ***

As described above, the position correction device 10 according to Embodiment 1 generates the corrected template 42 by correcting the template 40 to reduce the degree of deviation between the estimated positions of processing terminals and the positions of grid points in the template 40. Then, the position correction device 10 corrects the estimated positions based on the corrected template 42. This reduces the possibility of the positions of the processing terminals being corrected to incorrect positions, making it possible to appropriately correct the positions of the processing terminals.

Based on the number of processing terminals and the range of estimated positions, the position correction device 10 according to Embodiment 1 generates the template 40 of a corresponding arrangement. This makes it possible to correct the estimated positions by only performing fitting to the template 40 that is appropriate, without performing fitting to a large number of templates 40. As a result, the computational load associated with the correction of the estimated positions can be reduced.

*** Other Configurations ***

<Variation 1>

In Embodiment 1, the position correction device 10 generates the template 40 of a corresponding arrangement. However, the position correction device 10 may be configured to retrieve the template 40 of a corresponding type from a plurality of templates 40 generated in advance.

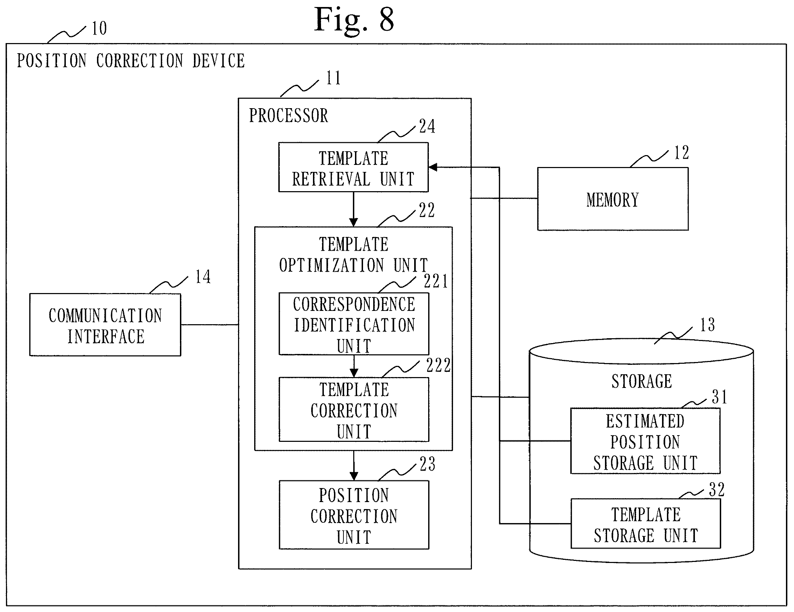

Referring to Fig. 8, a configuration of the position correction device 10 according to Variation 1 will be described.

The position correction device 10 differs from the position correction device 10 shown in Fig. 1 in that a template retrieval unit 24 is included as a functional component in place of the template generation unit 21. The position correction device 10 also differs from the position correction device 10 shown in Fig. 1 in that the storage 13 realizes the function of a template storage unit 32. The template storage unit 32 stores a plurality of templates 40 generated in advance. In place of the storage 13, an external storage device of the position correction device 10 may realize the function of the template storage unit 32.

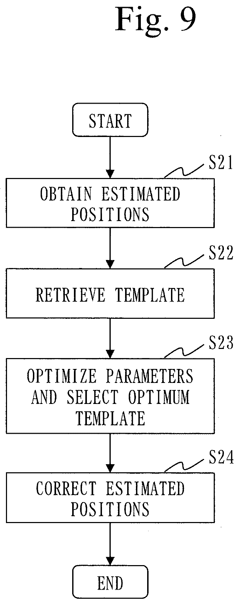

Referring to Fig. 9, processes of the position correction device 10 according to Variation 1 will be described.

The process of step S21 is the same as the process of step S11 in Fig. 2. However, the process is performed by the template retrieval unit 24 instead of the template generation unit 21. The processes of step S23 and step S24 are the same as the processes of step S13 and step S14 in Fig. 2.

(Step S22 in Fig. 9: Template retrieval process)

The template retrieval unit 24 retrieves, from the template storage unit 32, one or more templates 40 corresponding to the number of processing terminals and the range of the estimated positions of the plurality of processing terminals obtained in step S21. Specifically, the template retrieval unit 24 retrieves one or more templates 40 in cases of (A) and (B) generated in step S12 in Fig. 2.

In step S23, the template optimization unit 22 selects the template 40 with the smallest degree of deviation from the one or more templates 40 retrieved in step S22. The template optimization unit 22 also optimizes the distances $\Delta x$ and $\Delta y$ between grid points and the fitting position $\theta$ of the template 40.

This allows the same effects as those of Embodiment 1 to be achieved.

<Variation 2>

In Embodiment 1, the functional components are realized by software. However, as Variation 2, the functional components may be realized by hardware. With regard to this Variation 2, differences from Embodiment 1 will be described.

When the functional components are realized by hardware, the position correction device 10 includes an electronic circuit in place of the processor 11, the memory 12, and the storage 13. The electronic circuit is a dedicated circuit that realizes the functions of the functional components, the memory 12, and the storage 13.

The electronic circuit is assumed to be a single circuit, a composite circuit, a programed processor, parallel-programed processors, a logic IC, a GA, an ASIC, or an FPGA. GA is an abbreviation for gate array. ASIC is an abbreviation for application specific integrated circuit. FPGA is an abbreviation for field-programmable gate array.

The functional components may be realized by a single electronic circuit, or the functional components may be distributed among and realized by a plurality of electronic circuits.

<Variation 3>

As Variation 3, some of the functional components may be realized by hardware, and the rest of the functional components may be realized by software.

The processor 11, the memory 12, the storage 13, and the electronic circuit are referred to as processing circuitry. That is, the functions of the functional components are realized by the processing circuitry.

Embodiment 2.

Embodiment 2 differs from Embodiment 1 in that limitations on an installation interval of processing terminals are utilized to limit a correction range of the distances $\Delta x$ and $\Delta y$ between grid points. In Embodiment 2, this difference will be described, and description of the same aspects will be omitted.

*** Description of Configuration ***

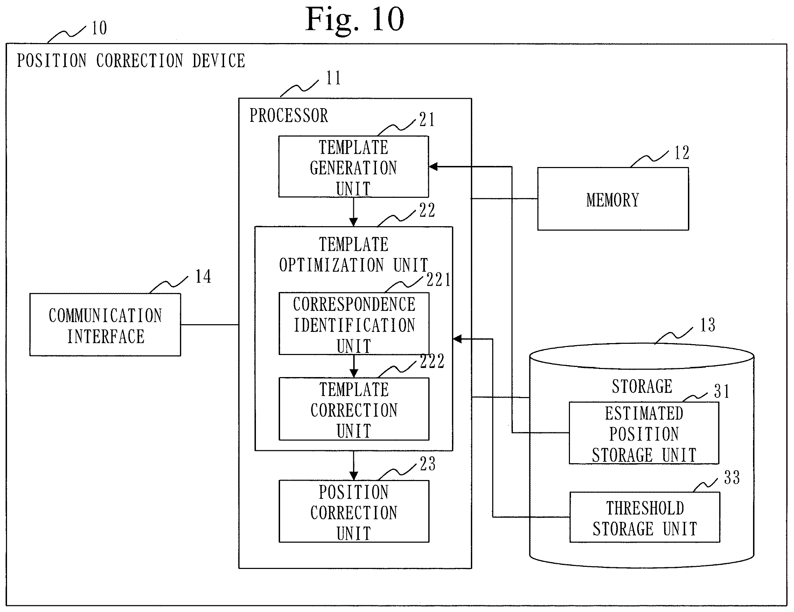

Referring to Fig. 10, a configuration of the position correction device 10 according to Embodiment 2 will be described.

The position correction device 10 differs from the position correction device 10 shown in Fig. 1 in that the storage 13 realizes the function of a threshold storage unit 33. The threshold storage unit 33 stores a limited range of the installation interval of processing terminals. The limited range is represented by an upper limit and a lower limit for the installation interval. In place of the storage 13, an external storage device of the position correction device 10 may realize the function of the threshold storage unit 33.

*** Description of Operation ***

In step S13 in Fig. 2, the template optimization unit 22 limits the correction range of the distances $\Delta x$ and $\Delta y$ between grid points based on the limited range stored in the threshold storage unit 33. Specifically, the template optimization unit 22 limits the correction range of the distances $\Delta x$ and $\Delta y$ between grid points to a range in which the installation interval calculated based on the distances $\Delta x$ and $\Delta y$ between grid points is equal to or smaller than the upper limit indicated by the limited range and equal to or greater than the lower limit indicated by the limited range.

*** Effects of Embodiment 2 ***

As described above, the position correction device 10 according to Embodiment 2 utilizes limitations on the installation interval of processing terminals to limit the correction range of the distances $\Delta x$ and $\Delta y$ between grid points. This makes it possible to omit computations for the distances $\Delta x$ and $\Delta y$ between grid points that are unrealistic, and reduce the computational load involved in optimizing the template 40. Furthermore, this prevents the distances $\Delta x$ and $\Delta y$ between grid points that are inappropriate from being used.

*** Other Configurations ***

<Variation 4>

In Embodiment 2, the threshold storage unit 33 stores the limited range of the installation interval of processing terminals. The threshold storage unit 33 may store other thresholds that relate to the processes of the position correction device 10.

For example, the threshold storage unit 33 may store an upper limit for the degree of deviation. In this case, in step S14 in Fig. 2, the position correction unit 23 determines whether the degree of deviation concerning the corrected template 42 selected in step S133 in Fig. 6 is below the upper limit stored in the threshold storage unit 33. If the degree of deviation is below the upper limit, the template optimization unit 22 corrects the estimated positions as described in Embodiment 1. If the degree of deviation is equal to or greater the upper limit, the template optimization unit 22 stops correcting the estimated positions.

If the degree of deviation is high, the deviation between the estimated positions and the grid points 41 in the corrected template 42 is large. Therefore, if the estimated positions are corrected based on the corrected template 42, the positions of the processing terminals may be corrected to incorrect positions, potentially reducing the accuracy of position estimation. By stopping correction using the upper limit for the degree of deviation, a decrease in the accuracy of position estimation can be prevented.

Embodiment 3.

Embodiment 3 differs from Embodiments 1 and 2 in that a plurality of processing terminals are classified to generate groups, and the estimated positions are corrected for each group. In Embodiment 3, this difference will be described, and description of the same aspects will be omitted.

In Embodiment 3, a case where a function is added to Embodiment 1 will be described. However, the function can also be added to Embodiment 2.

*** Description of Configuration ***

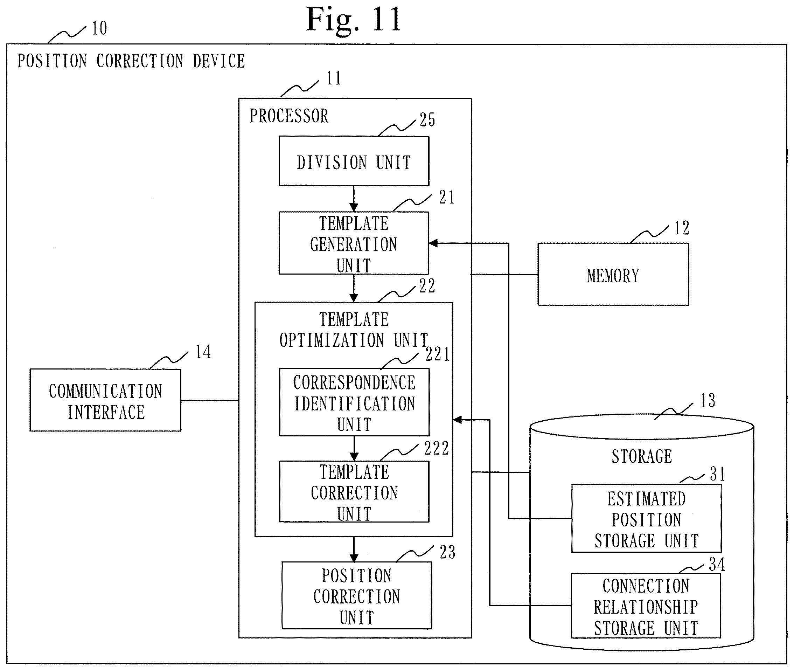

Referring to Fig. 11, a configuration of the position correction device 10 according to Embodiment 3 will be described.

The position correction device 10 differs from the position correction device 10 shown in Fig. 1 in that a division unit 25 is included as a functional component. The function of the division unit 25 is realized by software or hardware, like the other functional components.

The position correction device 10 also differs from the position correction device 10 shown in Fig. 1 in that the storage 13 functions as a connection relationship storage unit 34. In place of the storage 13, an external storage device of the position correction device 10 may realize the function of the connection relationship storage unit 34.

*** Description of Operation ***

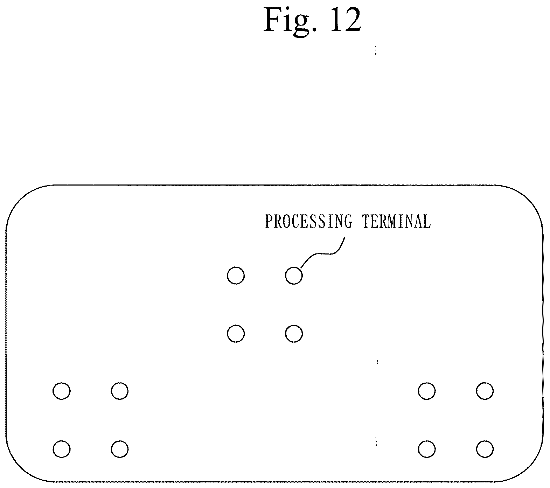

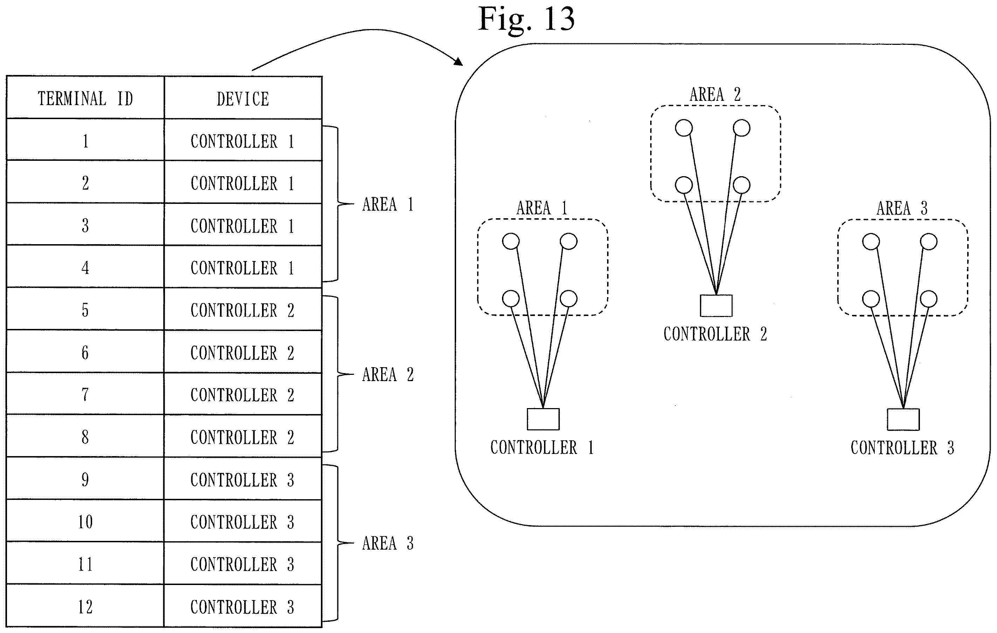

Referring to Figs. 12 and 13, the operation of the position correction device 10 according to Embodiment 3 will be described.

A procedure for the operation of the position correction device 10 according to Embodiment 3 is equivalent to the position correction method according to Embodiment 3. A program that realizes the operation of the position correction device 10 according to Embodiment 3 is equivalent to the position correction program according to Embodiment 3.

Referring to Fig. 12, an overview of the operation of the position correction device 10 according to Embodiment 3 will be described.

Fig. 12 shows an example where 12 processing terminals are arranged. In Fig. 12, when seen as a group of the 12 processing terminals, they are not arranged in a parallel pattern or a staggered pattern. Therefore, it is difficult to correct the estimated positions as a group of the 12 processing terminals. However, they are arranged in groups of four processing terminals each in a parallel pattern. Therefore, it is possible to correct the estimated positions for each group of four processing terminals.

Thus, the position correction device 10 according to Embodiment 3 classifies a plurality of processing terminals into groups, and corrects the estimated positions for each group.

Referring to Fig. 13, information stored in the connection relationship storage unit 34 according to Embodiment 3 will be described.

The connection relationship storage unit 34 stores connection relationships of each processing terminal. In Fig. 13, the connection relationship storage unit 34 stores devices to which each processing terminal is connected. For example, if each processing terminal is an air conditioning indoor unit, the device to which the processing terminal is connected may be an air conditioning controller or an outdoor air conditioning unit. Processing terminals connected to the same device are considered to be installed in the same area. Note that the type of device to be connected to depends on the type of processing terminal.

As a precondition for the processes of Fig. 2, the division unit 25 classifies the plurality of processing terminals to generate groups. Specifically, the division unit 25 refers to the information stored in the connection relationship storage unit 34 to identify connection relationships among the plurality of processing terminals. Then, the division unit 25 classifies the plurality of processing terminals to generate groups based on the connection relationships among the plurality of processing terminals.

For example, when the information shown in Fig. 13 is stored in the connection relationship storage unit 34, the division unit 25 determines that processing terminals connected to the same device have a connection relationship and classifies them into the same group. This generates a group of processing terminals with terminal IDs 1 to 4, a group of processing terminals with terminal IDs 5 to 8, and a group of processing terminals with terminal IDs 9 to 12.

Then, with each of these groups as a target group, the processes of Fig. 2 are performed.

*** Effects of Embodiment 3 ***

As described above, the position correction device 10 according to Embodiment 3 classifies a plurality of processing terminals to generate groups, and corrects estimated positions for each group. This makes it possible to effectively correct estimated positions even when it is difficult to correct the estimated positions for all the processing terminals at once.

*** Other Configurations ***

<Variation 5>

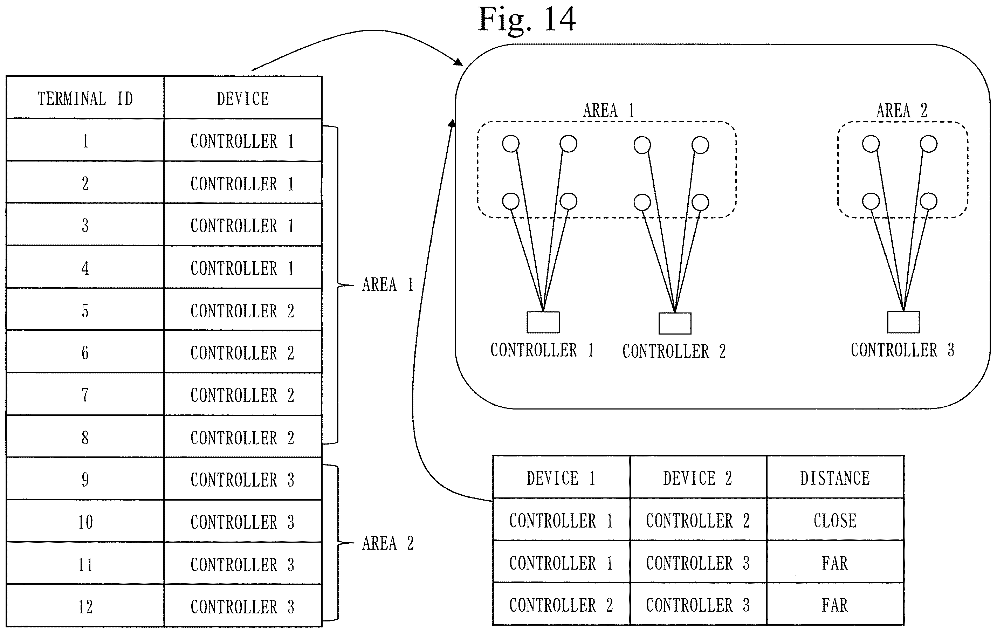

In Embodiment 3, the connection relationship storage unit 34 stores the devices to which each processing terminal is connected. As shown in Fig. 14, the connection relationship storage unit 34 may further store distances between the devices to which the processing terminals are connected. A distance may be a ratio scale such as one meter or an ordinal scale such as close or far. A distance is estimated based on information such as radio wave strength, radio wave arrival angle, and radio wave arrival time. Alternatively, a distance may be measured manually using a rangefinder, a measure, or the like.

The division unit 25 regards processing terminals connected to devices that are close to each other as being installed in the same area. On the other hand, the division unit 25 regards processing terminals connected to devices that are far from each other as being installed in different areas.

In Fig. 14, information is stored to indicate that a controller 1 and a controller 2 are close to each other, the controller 1 and a controller 3 are far from each other, and the controller 2 and the controller 3 are far from each other. As a result, the processing terminals with the terminal IDs 1 to 4 connected to the controller 1 and the processing terminals with the terminal IDs 5 to 8 connected to the controller 2 are regarded as being installed in the same area. Then, the processing terminals with the terminal IDs 1 to 8 are classified into the same group. On the other hand, the processing terminals with the terminal IDs 9 to 12 connected to the controller 3 are regarded as being located in an area different from the area of the processing terminals with the terminal IDs 1 to 8 and classified into a group different from the group of the processing terminals with the terminal IDs 1 to 8.

As described above, the processing terminals can be classified more accurately by using the distances between the devices to which the processing terminals are connected.

"Unit" in the above description may be interpreted as "circuit", "step", "procedure", "process", or "processing circuitry".

The embodiments and variations of the present disclosure have been described above. Two or more of these embodiments and variations may be implemented in combination. Alternatively, one or more of them may be partially implemented. Note that the present disclosure is not limited to the above embodiments and variations, and various modifications can be made as necessary.

**Reference Signs List**

10: position correction device; 11: processor; 12: memory; 13: storage; 14: communication interface; 21: template generation unit; 22: template optimization unit; 221: correspondence identification unit; 222: template correction unit; 23: position correction unit; 24: template retrieval unit; 25: division unit; 31: estimated position storage unit; 32: template storage unit; 33: threshold storage unit; 34: connection relationship storage unit; 40: template; 41: grid point; 42: corrected template.

**Claims**

1.  A position correction device comprising:

    a correspondence identification unit to fit a plurality of processing terminals whose positions are to be identified into a template based on estimated positions respectively corresponding to the plurality of processing terminals, the template indicating assumed relative positions of the plurality of processing terminals using grid points, which are intersections of lines drawn in a grid pattern, and identify grid points in the template respectively corresponding to the plurality of processing terminals;
    a template correction unit to generate a corrected template by correcting a distance between grid points in the template so as to reduce a degree of deviation calculated based on a distance between each of the plurality of processing terminals and a corresponding grid point identified by the correspondence identification unit; and
    a position correction unit to set each of the plurality of processing terminals as a target processing terminal, and correct an estimated position of the target processing terminal based on a grid point corresponding to the target processing terminal in the corrected template generated by the template correction unit.

2.  The position correction device according to claim 1,

    wherein the correspondence identification unit identifies a grid point in the template corresponding to each of the plurality of processing terminals, assuming that a reference position in a coordinate system of the plurality of processing terminals is at a fitting position in the template,
    wherein the template correction unit generates the corrected template by correcting the fitting position in the template so as to reduce the degree of deviation, and
    wherein the position correction unit corrects the estimated position of the target processing terminal to a position of a grid point corresponding to the target processing terminal in a case where the reference position is assumed to be at the fitting position in the corrected template.

3.  The position correction device according to claim 2,
    wherein the correspondence identification unit sets each of the plurality of processing terminals as a target processing terminal, and identifies a grid point closest to the estimated position of the target processing terminal as the grid point corresponding to the target processing terminal.

4.  The position correction device according to any one of claims 1 to 3, further comprising

    a template generation unit to generate one or more templates based on the number of the plurality of processing terminals and a range of estimated positions of the plurality of processing terminals,
    wherein the correspondence identification unit sets each of the one or more templates as a target template, and identifies grid points in the target template respectively corresponding to the plurality of processing terminals,
    wherein the template correction unit generates a corrected template by correcting the target template, and
    wherein the position correction unit corrects the estimated position of the target processing terminal using a corrected template in which the degree of deviation is small among each corrected template generated from the one or more templates.

5.  The position correction device according to claim 4,
    wherein for each of one or more combinations of the number of columns nx and the number or rows ny where a product of the number of columns nx and the number or rows ny is the number of processing terminals N of the plurality of processing terminals, the number of columns nx being the number of lines aligned in an x-axis direction among lines forming the grid points, the number of rows ny being the number of lines aligned in a y-axis direction among the lines forming the grid points, the template generation unit generates the template corresponding to each of the one or more combinations by setting a distance calculated by dividing a range w in the x-axis direction in a range of the estimate positions by a value obtained by subtracting one from the number of columns nx as a distance between grid points in the x-axis direction, and setting a distance calculated by dividing a range h in the y-axis direction in the range of the estimated positions by a value obtained by subtracting one from the number of rows ny as a distance between grid points in the y-axis direction.

6. The position correction device according to claim 5,
   wherein for each of one or more combinations of the number of columns nx and the number or rows ny where a product of the number of columns nx and the number or rows ny is twice the number of processing terminals N, the template generation unit generates the template corresponding to each of the one or more combinations by setting a distance calculated by dividing the range w in the x-axis direction by a value obtained by subtracting one from the number of columns nx as a distance between grid points in the x-axis direction, and setting a distance calculated by dividing the range h in the y-axis direction by a value obtained by subtracting one from the number of rows ny as a distance between grid points in the y-axis direction.

7. The position correction device according to any one of claims 1 to 3, further comprising
   a template retrieval unit to retrieve one or more templates from a plurality of templates stored in a template storage unit based on the number of the plurality of processing terminals and a range of the estimated positions of the plurality of processing terminals,
   wherein the correspondence identification unit sets each of the one or more templates retrieved by the template retrieval unit as a target template, and identifies grid points in the target template respectively corresponding to the plurality of processing terminals,
   wherein the template correction unit generates a corrected template by correcting the target template, and
   wherein the position correction unit corrects the estimated position of the target processing terminal using a corrected template in which the degree of deviation is small among each corrected template generated from each of the one or more templates.

8. The position correction device according to any one of claims 1 to 7,
   wherein the template correction unit corrects a distance between grid points within a limited range.

9. The position correction device according to any one of claims 1 to 8,
   wherein the position correction unit stops correcting the estimated positions when the degree of deviation concerning the corrected template is equal to or greater than an upper limit value.

10. The position correction device according to any one of claims 1 to 9, further comprising
    a division unit to classify the plurality of processing terminals to generate groups based on a device to which each of the plurality of processing terminals is connected,
    wherein the correspondence identification unit sets each of the groups generated by the division unit as a target group, fits processing terminals classified into the target group into a template, and identifies grid points in the template.

11. The position correction device according to claim 10,
    wherein the division unit classifies the plurality of processing terminals to generate groups based on a distance between each pair of devices to which the plurality of processing terminals are connected.

12. A position correction method comprising:

    fitting a plurality of processing terminals whose positions are to be identified into a template based on estimated positions respectively corresponding to the plurality of processing terminals, the template indicating assumed relative positions of the plurality of processing terminals using grid points, which are intersections of lines drawn in a grid pattern, and identifying grid points in the template respectively corresponding to the plurality of processing terminals, by a computer;
    generating a corrected template by correcting a distance between grid points in the template so as to reduce a degree of deviation calculated based on a distance between each of the plurality of processing terminals and a corresponding grid point, by the computer; and
    setting each of the plurality of processing terminals as a target processing terminal, and correcting an estimated position of the target processing terminal based on a grid point corresponding to the target processing terminal in the corrected template, by the computer.

**13.** A position correction program that causes a computer to function as a position correction device to perform:

a correspondence identification process-of fitting a plurality of processing terminals whose positions are to be identified into a template based on estimated positions respectively corresponding to the plurality of processing terminals, the template indicating assumed relative positions of the plurality of processing terminals using grid points, which are intersections of lines drawn in a grid pattern, and identifying grid points in the template respectively corresponding to the plurality of processing terminals;

a template correction process of generating a corrected template by correcting a distance between grid points in the template so as to reduce a degree of deviation calculated based on a distance between each of the plurality of processing terminals and a corresponding grid point identified by the correspondence identification process; and

a position correction process of setting each of the plurality of processing terminals as a target processing terminal, and correcting an estimated position of the target processing terminal based on a grid point corresponding to the target processing terminal in the corrected template generated by the template correction process.

# Fig. 1

POSITION CORRECTION DEVICE 10

PROCESSOR 11

TEMPLATE GENERATION UNIT 21

TEMPLATE OPTIMIZATION UNIT 22

CORRESPONDENCE IDENTIFICATION UNIT 221

TEMPLATE CORRECTION UNIT 222

POSITION CORRECTION UNIT 23

MEMORY 12

STORAGE 13

ESTIMATED POSITION STORAGE UNIT 31

COMMUNICATION INTERFACE 14

# Fig. 2

```
            ┌─────────┐
            │  START  │
            └─────────┘
                 │
                 ▼                    S11
        ┌─────────────────┐
        │ OBTAIN ESTIMATED │
        │    POSITIONS     │
        └─────────────────┘
                 │
                 ▼                    S12
        ┌─────────────────┐
        │ GENERATE TEMPLATE │
        └─────────────────┘
                 │
                 ▼                    S13
        ┌─────────────────┐
        │ OPTIMIZE PARAMETERS │
        │ AND SELECT OPTIMUM  │
        │     TEMPLATE        │
        └─────────────────┘
                 │
                 ▼                    S14
        ┌─────────────────┐
        │ CORRECT ESTIMATED │
        │    POSITIONS      │
        └─────────────────┘
                 │
                 ▼
            ┌─────────┐
            │   END   │
            └─────────┘
```

EP 4 682 572 A1

# Fig. 3

<table>
<tr><td rowspan="2">TERMINAL ID</td><td colspan="2">ESTIMATED POSITION</td></tr>
<tr><td>x COORDINATE</td><td>y COORDINATE</td></tr>
<tr><td>1</td><td>4. 1</td><td>4. 1</td></tr>
<tr><td>2</td><td>-0. 6</td><td>8. 3</td></tr>
<tr><td>3</td><td>3. 9</td><td>8. 6</td></tr>
<tr><td>4</td><td>0</td><td>0</td></tr>
<tr><td>5</td><td>3. 8</td><td>-0. 1</td></tr>
<tr><td>6</td><td>-0. 1</td><td>4. 0</td></tr>
</table>

31

EP 4 682 572 A1

Fig. 4

# Fig. 5

nx=2, ny=3,
αx=0, αy=0, β=0

Δy=2

Δx=2

(A)

nx=2, ny=6,
αx=0, αy=1, β=0

Δy=1

Δx=2

(B)

nx=2, ny=6,
αx=0, αy=1, β=1

Δy=1

Δx=2

(C)

EP 4 682 572 A1

# Fig. 6

```
        ┌─────────────┐
        │    START    │
        └─────────────┘
               │
               ▼                    ⌇ S131
   ┌──────────────────────────┐
   │  ASSOCIATE PROCESSING    │
   │  TERMINALS WITH GRID     │
   │       POINTS 41          │
   └──────────────────────────┘
               │
               ▼                    ⌇ S132
   ┌──────────────────────────┐
   │  CORRECT PARAMETERS OF   │
   │       TEMPLATE 40        │
   └──────────────────────────┘
               │
               ▼                    ⌇ S133
   ┌──────────────────────────┐
   │   SELECT TEMPLATE 40     │
   │  WITH SMALLEST DEGREE    │
   │     OF DEVIATION         │
   └──────────────────────────┘
               │
               ▼
        ┌─────────────┐
        │     END     │
        └─────────────┘
```

# Fig. 7

ESTIMATED POSITIONS OF
PROCESSING TERMINALS

CORRECTION OF ESTIMATED
POSITIONS

REFERENCE POSITION

REFERENCE POSITION
= FITTING POSITION

TEMPLATE 40

FITTING POSITION

## Fig. 8

# Fig. 9

START

S21

OBTAIN ESTIMATED
POSITIONS

S22

RETRIEVE TEMPLATE

S23

OPTIMIZE PARAMETERS
AND SELECT OPTIMUM
TEMPLATE

S24

CORRECT ESTIMATED
POSITIONS

END

EP 4 682 572 A1

## Fig. 10

POSITION CORRECTION DEVICE 10

PROCESSOR 11

TEMPLATE GENERATION UNIT 21

MEMORY 12

TEMPLATE OPTIMIZATION UNIT 22

CORRESPONDENCE IDENTIFICATION UNIT 221

TEMPLATE CORRECTION UNIT 222

COMMUNICATION INTERFACE 14

POSITION CORRECTION UNIT 23

STORAGE 13

ESTIMATED POSITION STORAGE UNIT 31

THRESHOLD STORAGE UNIT 33

EP 4 682 572 A1

# Fig. 11

POSITION CORRECTION DEVICE — 10

PROCESSOR — 11

DIVISION UNIT — 25

TEMPLATE GENERATION UNIT — 21

MEMORY — 12

TEMPLATE OPTIMIZATION UNIT — 22

CORRESPONDENCE IDENTIFICATION UNIT — 221

COMMUNICATION INTERFACE — 14

TEMPLATE CORRECTION UNIT — 222

POSITION CORRECTION UNIT — 23

STORAGE — 13

ESTIMATED POSITION STORAGE UNIT — 31

CONNECTION RELATIONSHIP STORAGE UNIT — 34

EP 4 682 572 A1

# Fig. 12

PROCESSING TERMINAL

# Fig. 13

| TERMINAL ID | DEVICE |
|:---:|:---:|
| 1 | CONTROLLER 1 |
| 2 | CONTROLLER 1 |
| 3 | CONTROLLER 1 |
| 4 | CONTROLLER 1 |
| 5 | CONTROLLER 2 |
| 6 | CONTROLLER 2 |
| 7 | CONTROLLER 2 |
| 8 | CONTROLLER 2 |
| 9 | CONTROLLER 3 |
| 10 | CONTROLLER 3 |
| 11 | CONTROLLER 3 |
| 12 | CONTROLLER 3 |

AREA 1 — Terminals 1–4
AREA 2 — Terminals 5–8
AREA 3 — Terminals 9–12

AREA 1
CONTROLLER 1

AREA 2
CONTROLLER 2

AREA 3
CONTROLLER 3

EP 4 682 572 A1

# Fig. 14

| TERMINAL ID | DEVICE |
|:---:|:---:|
| 1 | CONTROLLER 1 |
| 2 | CONTROLLER 1 |
| 3 | CONTROLLER 1 |
| 4 | CONTROLLER 1 |
| 5 | CONTROLLER 2 |
| 6 | CONTROLLER 2 |
| 7 | CONTROLLER 2 |
| 8 | CONTROLLER 2 |
| 9 | CONTROLLER 3 |
| 10 | CONTROLLER 3 |
| 11 | CONTROLLER 3 |
| 12 | CONTROLLER 3 |

AREA 1 (terminals 1–8)

AREA 2 (terminals 9–12)

AREA 1

AREA 2

CONTROLLER 1   CONTROLLER 2

CONTROLLER 3

| DEVICE 1 | DEVICE 2 | DISTANCE |
|:---:|:---:|:---:|
| CONTROLLER 1 | CONTROLLER 2 | CLOSE |
| CONTROLLER 1 | CONTROLLER 3 | FAR |
| CONTROLLER 2 | CONTROLLER 3 | FAR |

EP 4 682 572 A1

## INTERNATIONAL SEARCH REPORT

| International application No. |
|---|
| **PCT/JP2023/015720** |

**A. CLASSIFICATION OF SUBJECT MATTER**

*G01S 5/02*(2010.01)i
FI: G01S5/02 Z

According to International Patent Classification (IPC) or to both national classification and IPC

**B. FIELDS SEARCHED**

Minimum documentation searched (classification system followed by classification symbols)

G01S5/00-5/14; G01S19/00-19/55;

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-090882 A (MITSUBISHI ELECTRIC CORPORATION) 06 April 2006 (2006-04-06) entire text, all drawings | 1-13 |
| A | JP 11-211807 A (NIPPON TELEGR. & TELEPH. CORP.) 06 August 1999 (1999-08-06) entire text, all drawings | 1-13 |
| A | US 2019/0073435 A1 (1Q, LLC) 07 March 2019 (2019-03-07) entire text, all drawings | 1-13 |
| A | JP 2019-039791 A (FUJITSU LIMITED) 14 March 2019 (2019-03-14) entire text, all drawings | 1-13 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/015720**

| Patent document cited in search report | | | Publication date (day/month/year) | Patent family member(s) | | | Publication date (day/month/year) |
|---|---|---|---|---|---|---|---|
| JP | 2006-090882 | A | 06 April 2006 | (Family: none) | | | |
| JP | 11-211807 | A | 06 August 1999 | (Family: none) | | | |
| US | 2019/0073435 | A1 | 07 March 2019 | US | 2021/0319065 | A1 | |
| JP | 2019-039791 | A | 14 March 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006090868 A